# EUROPÄISCHE PATENTSCHRIFT

(11) **EP 3 549 717 B1**
(45) Veröffentlichungstag und Bekanntmachung des Hinweises auf die Patenterteilung: **30.12.2020**
(21) Anmeldenummer: 19160671.4
(22) Anmeldetag: 05.03.2019
(51) Int. Cl.: B24B 23/02, B25F 5/00, B23Q 11/12

(54) **HANDWERKZEUGMASCHINE**
HANDHELD MACHINE TOOL
MACHINE-OUTIL PORTATIVE

(30) Priorität: 03.04.2018 DE 102018107808
(43) Veröffentlichungstag der Anmeldung: 09.10.2019
(73) Patentinhaber: C. & E. Fein GmbH, 73529 Schwäbisch Gmünd-Bargau (DE)
(72) Erfinder: Dürnegger, Wolfgang, 73529 Schwäbisch Gmünd-Bargau (DE)
(74) Vertreter: Roos, Michael

(56) Entgegenhaltungen:
- WO-A1-2018/208235
- DE-U1- 8 632 779
- DE-U1-212013 000 108
- US-A1- 2015 336 238

## Beschreibung

Die Erfindung betrifft eine Handwerkzeugmaschine nach dem Oberbegriff des Anspruchs 1 (siehe z.B. DE 86 32 779 U1).

Derartige Handwerkzeugmaschinen, beispielsweise Winkelschleifer, werden häufig zur Bearbeitung von Metalloberflächen verwendet. Hierbei tritt jedoch das Problem auf, dass die bei der Oberflächenbearbeitung entstehenden Späne und andere Schmutzpartikel in das Innere der Handwerkzeugmaschine gelangen können und sich dabei insbesondere im Bereich des Motors zu Clustern agglomerieren, was zu Beschädigungen des Motors führen kann. Zudem sind die bei der Bearbeitung von Metalloberflächen entstehenden Späne elektrisch leitend, so dass auch die Gefahr von elektrischen Kurzschlüssen besteht, die mit der Gefahr einhergehen, dass das Gehäuse der Handwerkzeugmaschine selbst unter Strom bzw. Spannung gesetzt wird, was eine Gefahr für den Nutzer derartiger Handwerkzeugmaschinen in sich birgt.

Aus der EP 2 326 465 B1 ist eine Handwerkzeugmaschine der eingangs genannten Art bekannt, bei der die Kühlluft - beispielsweise durch eine Spirale - umgelenkt wird. Hierdurch werden die in der Luft mitgeführten Schmutzpartikel an den Rand der Spirale gedrängt und dabei entweder gesammelt oder durch einen Auslass aus dem Gehäuse der Handwerkzeugmaschine geleitet. Hierbei hat es sich jedoch als nachteilig erwiesen, dass mit der Ausleitung der Schmutzpartikel auch gleichzeitig ein Teil der Kühlluft aus dem System geleitet wird, was sich jedoch nachteilig auf die Kühlleistung des Motors auswirkt, so dass letztlich der Lüfter größer ausgelegt sein muss.

Der Erfindung liegt daher die Aufgabe zugrunde, die oben genannten Nachteile zu reduzieren und eine Handwerkzeugmaschine bereitzustellen, die eine möglichst einfache Kühlung des Motors gewährleistet und gleichzeitig sicherstellt, dass sich in der Kühlluft enthaltene Schmutzpartikel nicht nachteilig auf die Lebensdauer des Motors auswirken.

Diese Aufgabe wird gemäß der vorliegenden Erfindung bei einer Handwerkzeugmaschine der eingangs genannten Art durch die Merkmale des kennzeichnenden Teil des Anspruch 1.

Hierdurch wird gewährleistet, dass der den beispielsweise als ein EC-Motor ausgebildeten Motor in seinem Inneren durchströmende Teilluftstrom im Vergleich zu dem äußeren Teilluftstrom vergleichsweise sauber ist, so dass eine Beschädigung des Motors insbesondere im Bereich der Polwicklungen vermieden werden kann. Durch den Separator werden also die in der Kühlluft enthaltenen Schmutzpartikel in dem äußeren Teilluftstrom konzentriert, der an dem Motor außenumfangsseitig vorbeiströmen kann. In diesem Bereich ist der Motor vergleichsweise unempfindlich gegenüber Schmutzpartikeln, so dass die Gefahr einer Beschädigung des Motors selbst bei erhöhtem Verschmutzungsgrad in dem äußeren Teilluftstrom gering ist. Somit kann durch die Aufteilung der Kühlluft in den äußeren Teilluftstrom und in den inneren Teilluftstrom und durch die Konzentrierung der Schmutzpartikel in dem äußeren Teilluftstrom eine Beschädigung des Motors besonders einfach vermieden werden. Da zudem keine Schmutzpartikel gesondert aus der Werkzeugmaschine ausgeleitet werden müssen, was mit einem Kühlleistungsverlust verbunden wäre, wirkt sich das Reinigen des inneren Teilluftstroms durch die Konzentrierung der Schmutzpartikel in dem äußeren Teilluftstrom nicht negativ auf die Kühlleistung der erfindungsgemäßen Werkzeugmaschine aus. Die in dem äußeren Teilluftstrom enthaltenen Schmutzpartikel werden vielmehr durch den mindestens einen Luftauslass gemeinsam mit dem äußeren Teilluftstrom aus dem Gehäuse ausgeleitet. Schmutzpartikel sind dabei Partikel mit einem Durchmesser, der größer ist als 1,5 µm. Neben EC-Motoren können im Rahmen der Erfindung auch andere Motoren, insbesondere andere Elektromotoren verwendet werden.

Als besonders günstig hat es sich auch erwiesen, wenn der Separator als eine Separatorscheibe gebildet ist, die in Hauptströmungsrichtung vor dem Motor angeordnet und drehfest mit der Rotorwelle verbunden ist. Durch die sich drehende Separatorscheibe wirkt auf die in der Kühlluft enthaltenen Schmutzpartikel eine radial nach außen wirkende Kraft, die bewirkt, dass die Schmutzpartikel vor der Aufspaltung in den inneren Teilluftstrom und den äußeren Teilluftstrom radial weg von dem Inneren des Motors nach außen bewegt werden. Zudem ist es auch möglich, in die Separatorscheibe mindestens einen Permanentmagneten zu integrieren, wodurch es letztlich beispielsweise in Kombination mit einem Hall-Sensor möglich ist, die Drehrichtung des Motors zu erfassen. Im Rahmen der Erfindung ist es jedoch explizit auch vorgesehen, dass die Separatorscheibe statisch gebildet ist, sich also gerade nicht mit der Rotorwelle bewegt. Auch ist es vorgesehen, dass der Separator nicht als Scheibe ausgebildet ist, sondern eine andere geometrische Figur aufweist.

Erfindungsgemäß und von Vorteil hat es sich auch gezeigt, wenn das Gehäuse mehrteilig gebildet ist und ein den Motor aufnehmendes Motorgehäuse umfasst, das an seiner dem Motor abgewandten Stirnseite mindestens eine innere Öffnung und mindestens eine äußere Öffnung aufweist, die voneinander radial beabstandet sind. Durch die inneren Öffnungen kann der innere Teilluftstrom dem Motorinneren zugeleitet werden, während der äußere Teilluftstrom durch die äußeren Öffnungen an dem Motor außenumfangsseitig vorbeigeleitet wird.

In diesem Zusammenhang hat es sich besonders bewährt, wenn das Flächenverhältnis der Summe der Flächen der mindestens einen inneren Öffnung zu der Summe der Flächen der mindestens einen äußeren Öffnung zwischen 1:1,5 und 1:0,75 und besonders bevorzugt bei 1:0,9 liegt. Durch die Festlegung der Flächenverhältnisse zwischen den inneren Öffnungen und den äußeren Öffnungen kann der Durchfluss der Kühlluft gezielt gesteuert werden, wobei sich insbesondere mit einem Flächenverhältnis von 1:0,9 die Gesamtkühlleistung der Handwerkzeugmaschine optimieren lässt.

Als vorteilhaft hat es sich zudem auch erwiesen, wenn die mindestens eine innere Öffnung und/oder die mindestens eine äußere Öffnung als ein ringsegmentartiger Schlitz ausgebildet ist. Durch die ringsegmentartige Schlitzform der inneren Öffnungen und/oder der äußeren Öffnungen kann die Kühlluft besonders leicht dem Motor zugeführt werden. Zudem hat diese Ausgestaltung auch fertigungstechnische Vorteile, da hierdurch insbesondere der Abstand zwischen den äußeren Öffnungen und der Außenwand des Motorgehäuses konstant gehalten werden kann. Hierdurch werden fertigungsinduzierte Schwachstellen in dem Motorengehäuse vermieden.

Als günstig hat es sich auch erwiesen, wenn die mindestens eine innere Öffnung mit einem inneren Überströmungskanal fluidleitend verbunden ist und wenn die mindestens eine äußere Öffnung mit einem äußeren Überströmungskanal fluidleitend verbunden ist. Durch die Verwendung der inneren und äußeren Überströmungskanäle kann die Kühlluft durch den Motor hindurch und auch um diesen herum geführt werden und somit besonders einfach den Stellen zugeführt werden, die besonders kühlungsbedürftig sind.

In diesem Zusammenhang hat es sich auch als besonders vorteilhaft gezeigt, wenn die inneren Überströmungskanäle zwischen den Polwicklungen des Motors und wenn die äußeren Überströmungskanäle außenumfangsseitig an dem Motor ausgebildet sind. Insbesondere können hierbei die äußeren Überströmungskanäle zumindest teilweise durch den Außenumfang des Motors selbst gebildet sein. Die einzelnen äußeren Überströmungskanäle können dabei voneinander durch Führungsrippen getrennt sein, die innenumfangsseitig an dem Motorgehäuse ausgebildet sind und eine Führung für den Motor bereitstellen. Hierdurch ist gewährleistet, dass die in dem äußeren Teilluftstrom enthaltenen Schmutzpartikel effektiv ohne Clusterbildung abgeleitet werden, ohne dass diese in Kontakt mit Bereichen des Motors gelangen können, die sie unter Umständen beschädigen würden.

Bewährt hat es sich zudem auch, wenn an der dem Lufteinlass zugewandten Stirnseite des Motorgehäuses ein einen Ringbund aufweisender Fortsatz ausgebildet ist und wenn der Separator auf der dem Lufteinlass abgewandten Stirnseite eine den Ringbund aufnehmende Vertiefung aufweist zur Bildung eines den inneren Teilluftstrom leitenden Luftspalts zwischen dem Gehäuse und dem Separator. Durch den Luftspalt, dessen Einlass zwischen dem an dem Fortsatz ausgebildeten Ringbund sowie der den Ringbund aufnehmenden Vertiefung ausgebildet ist, wird sichergestellt, dass der innere Teilluftstrom möglichst frei von Verunreinigungen ist. Der Einlass des mit den inneren Öffnungen verbundenen Luftspalts ist dabei so angeordnet, dass Schmutzpartikel, die in der Kühlluft enthalten sind, nicht in den Luftspalt selbst gelangen, sondern an dem zwischen dem Fortsatz und dem Ringbund gebildeten Bereich in Richtung der äußeren Öffnungen abgelenkt werden und dem äußeren Teilluftstrom zugeführt und durch diesen letztlich an dem Motor außenumfangsseitig vorbeigeführt werden. Im Rahmen der Erfindung ist es dabei vorgesehen, dass der den Ringbund aufweisende Fortsatz entweder einteilig mit dem Motorgehäuse gebildet ist oder mehrteilig ausgeführt ist. Besonders bevorzugt ist dabei der Ringbund als separates, scheibenförmiges Bauteil ausgeführt, während der Fortsatz einstückig mit dem Motorgehäuse gebildet ist. Dies hat fertigungstechnische Vorteile.

Hierbei hat es sich auch als günstig erwiesen, wenn das Verhältnis zwischen der Breite des Luftspalts und der Höhe des Luftspalts bei 3:4 liegt, und/oder wenn das Verhältnis zwischen der Höhe des Fortsatzes und der radialen Erstreckung des Ringbunds bei 4:3 liegt. Die Höhe des Luftspalts ist dabei definiert als der radiale Abstand zwischen dem Ringbund und der Wandung der in der Separatorscheibe ausgebildeten Vertiefung und die Breite des Luftspalts bestimmt sich durch den axialen Abstand zwischen der Stirnseite des Ringbunds und dem Boden der Vertiefung. Die Höhe des Fortsatzes wiederum ist definiert durch den Abstand zwischen der Stirnseite des Motorgehäuses, die dem Lufteinlass zugewandt ist, und der dieser Stirnseite zugewandten Seite des Ringbunds. Durch die Wahl der vorstehend genannten Verhältnisse wird erreicht, dass der durch den Luftspalt strömende Luftstrom, der letztlich den inneren Teilluftstrom bildet, möglichst frei von Verunreinigungen ist. Insbesondere wird hierdurch eine Schmutzführung bereitgestellt, die bewirkt, dass Schmutzpartikel gerade nicht in den Luftspalt zwischen dem Motorgehäuse und dem Separator eindringen können, sondern vielmehr dem äußeren Teilluftstrom zugeführt und durch die äußeren Öffnungen außenumfangsseitig an dem Motor vorbeigeführt werden.

Um die Luft des inneren Teilluftstroms besonders sauber zu halten, hat es sich zudem auch als vorteilhaft erwiesen, wenn zwischen dem Gehäuse und dem Separator ein Umkehrungsbereich ausgebildet ist, in dem die Strömungsrichtung des inneren Teilluftstroms der Hauptströmungsrichtung entgegen gerichtet ist. Auch dies führt dazu, dass möglichst wenige Schmutzpartikel in den inneren Teilluftstrom gelangen, was sich positiv auf die Lebensdauer des Motors auswirkt.

Als günstig hat es sich auch erwiesen, wenn im Bereich des mindestens einen Lufteinlasses eine eine Filterfunktion bereitstellende Filterstruktur angeordnet ist, deren Öffnungen eine Größe aufweisen, die bevorzugt zwischen 100 µm und 300 µm liegt. Mit der Filterstruktur wird erreicht, dass ein Großteil der bei der Verwendung der Handwerkzeugmaschine auftretenden Schmutzpartikel erst gar nicht in das Innere der Handwerkzeugmaschine gelangen. Die Filterstruktur kann dabei insbesondere als poröses, amorphes Material oder als Filter mit regelmäßig angeordneten Öffnungen realisiert sein.

Bewährt hat es sich zudem auch, wenn eine den Motor ansteuernde Steuerelektronik vorgesehen ist, die von dem Luftführungsbereich abgetrennt ist, und wenn zwischen dem Lufteinlass und dem Separator ein Elektronikkühlabschnitt gebildet ist, in dem ein thermisch leitend mit der Steuerelektronik verbundener Kühlkörper angeordnet ist. Somit ist es möglich, die Steuerelektronik als solche von dem Luftstrom der Kühlluft zu isolieren, so dass hierdurch letztlich verhindert wird, dass metallische Schmutzpartikel die Steuerelektronik der Handwerkzeugmaschine beschädigen können. Diese Verunreinigungen treffen allenfalls auf den in dem Elektronikkühlabschnitt angeordneten Kühlkörper, der in einer bevorzugten Ausführungsform aus Aluminium gefertigt ist. Die Kühlrippen des Kühlkörpers sind dabei vorteilshafterweise parallel zu der Hauptströmungsrichtung angeordnet.

Bewährt hat es sich zudem auch, wenn in dem Motorgehäuse ein von dem äußeren Teilluftstrom abgetrennter Kabelschacht ausgebildet ist zur Ausleitung von den Motor kontaktierenden Anschlusskabeln aus dem Motorgehäuse. Hierdurch kann sichergestellt werden, dass die Anschlusskabel nicht in Kontakt mit den in dem äußeren Teilluftstrom enthaltenen Schmutzpartikeln kommen. Einerseits wird dadurch vermieden, dass die Anschlusskabel durch die Schmutzpartikel beschädigt werden, und auf der anderen Seite lässt sich dadurch verhindern, dass sich die Schmutzpartikel an den Anschlusskabeln anlagern, was mit einer die Durchgängigkeit der Überströmungskanäle reduzierenden Clusterbildung verbunden wäre. Dies trägt also auch dem Gedanken Rechnung, den Luftführungsbereich möglichst glatt zu gestalten, um eine Anlagerung von Schmutzpartikeln zu verhindern. In diesem Zusammenhang hat es sich zudem auch bewährt, wenn die Anschlusskabel aus unkonfektionierten Kabeln gebildet sind, die dann einzeln durch den Kabelschacht zu der Steuerelektronik geführt werden können.

Als besonders günstig hat es sich auch erwiesen, wenn zwischen dem Luftauslass und dem Motor eine Lüfterscheibe vorgesehen ist zur Rekombination des inneren Teilluftstroms mit dem äußeren Teilluftstrom auf der dem Motor abgewandten Seite der Lüfterscheibe und zur Zuleitung des rekombinierten Luftstroms zu dem mindestens einen Luftauslass. Durch die Anordnung der Lüfterscheibe wird gewährleistet, dass die Rekombination des äußeren Teilluftstroms mit dem inneren Teilluftstrom erst auf der dem Motor abgewandten Stirnseite der Lüfterscheibe erfolgt, so dass ein Eindringen von Schmutzpartikeln aus dem äußeren Teilluftstrom in den inneren Teilluftstrom und damit in das Innere des Motors verhindert wird.

In diesem Zusammenhang hat es sich auch besonders bewährt, wenn die Lüfterscheibe Rekombinationskonturen aufweist, die geeignet sind, den inneren Teilluftstrom radial nach außen in Richtung des äußeren Teilluftstroms und axial in Richtung der Hauptströmungsrichtung zu führen. Die Ausgestaltung der Lüfterscheibe bewirkt zudem einen Venturi-Effekt, wodurch der äußere Teilluftstrom aktiv in Richtung des Luftauslasses gezogen wird. Durch eine derartige Lüfterscheibe werden Fördermengen zwischen 800 und 900 L pro Minute erreicht.

Im Folgenden wird die Erfindung an einem in den Zeichnungen dargestellten Ausführungsbeispiel näher erläutert; es zeigen:
- Fig. 1: eine Explosionsdarstellung einer erfindungsgemäßen Handwerkzeugmaschine,
- Fig. 2: einen Längsschnitt durch die Handwerkzeugmaschine,
- Fig. 3: das Detail A aus der Figur 2,
- Fig. 4: einen Querschnitt entlang des Schnittes IV-IV aus der Figur 2,
- Fig. 5: eine erste perspektivische Ansicht des Motorgehäuses,
- Fig. 6: eine weitere perspektivische Ansicht des Motorgehäuses,
- Fig. 7: eine perspektivische Ansicht der Lüfterscheibe in Hauptströmungsrichtung, und
- Fig. 8: eine perspektivische Ansicht der Lüfterscheibe entgegen der Hauptströmungsrichtung.

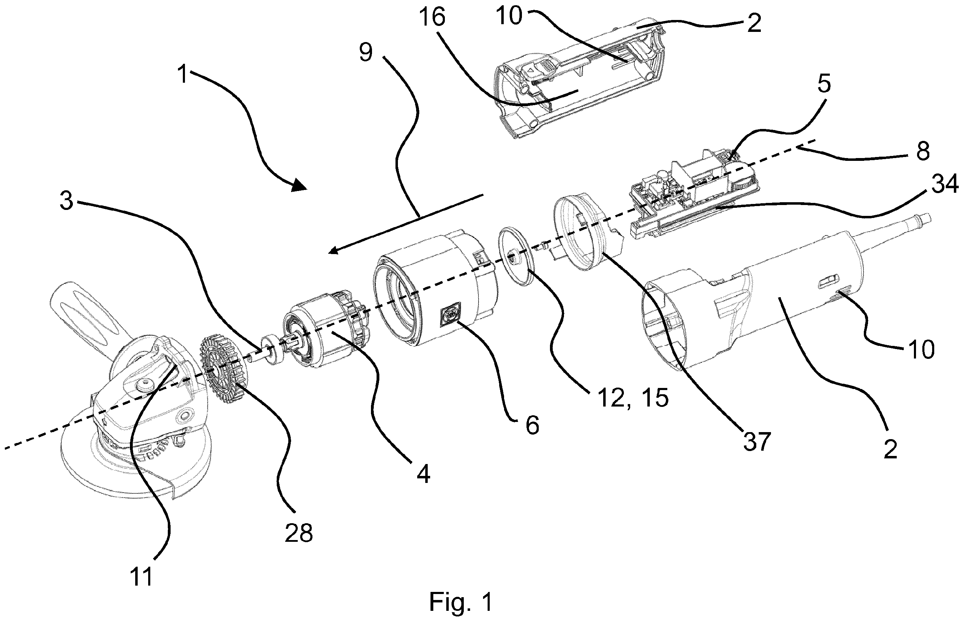

Figur 1 zeigt eine Explosionsansicht einer erfindungsgemäßen Handwerkzeugmaschine 1. Die Handwerkzeugmaschine 1 umfasst dabei ein Gehäuse 2 mit einem Motorgehäuse 6, in dem ein eine Rotorwelle 3 antreibender Motor 4 aufgenommen ist, der durch eine Steuerelektronik 5 angesteuert wird. In dem Gehäuse 2 ist ein Luftführungsbereich 7 ausgebildet, durch den Kühlluft in einer im Wesentlichen parallel zu einer Motorlängsachse 8 orientierten Hauptströmungsrichtung 9 zu dem Motor 4 geleitet werden kann. Der Luftführungsbereich 7 ist dabei einenends durch mehrere Lufteinlässe 10 und anderenends durch mehrere Luftauslässe 11 begrenzt. Durch die Lufteinlässe 10 wird Umgebungsluft, die als Kühlluft dient, in das Innere des Gehäuses 2 geleitet und durch die Luftauslässe 11 wieder aus dem Gehäuse 2 geleitet. In dem Luftführungsbereich 7 ist - dem Motor 4 vorgelagert - ein Separator 12 angeordnet, durch den es möglich ist, die Kühlluft aufzuteilen in einen den Motor 4 außenumfangsseitig umströmenden äußeren Teilluftstrom 13 und in einen den Motor 4 durchströmenden inneren Teilluftstrom 14. Durch den Separator 12 wird dabei zudem erreicht und sichergestellt, dass der Verschmutzungsgrad des inneren Teilluftstroms 14 niedriger ist als der Verschmutzungsgrad des äußeren Teilluftstroms 13. Der Separator 12 ist dabei in dem gezeigten Ausgangsbeispiel als eine Separatorscheibe 15 gebildet, die drehfest mit der Rotorwelle 3 verbunden ist. Zwischen dem Motor 4 und dem Luftauslass 11 ist zudem eine Lüfterscheibe 28 angeordnet, durch die die Kühlluft zunächst in das Gehäuse 2 eingezogen und aus dem Luftauslass 11 wieder herausbefördert wird. In dem Gehäuse befindet sich eine dem Separator 12 vorgelagerte Luftleitstruktur 37, durch die der Weg der Kühlluft strömungsoptimiert wird.

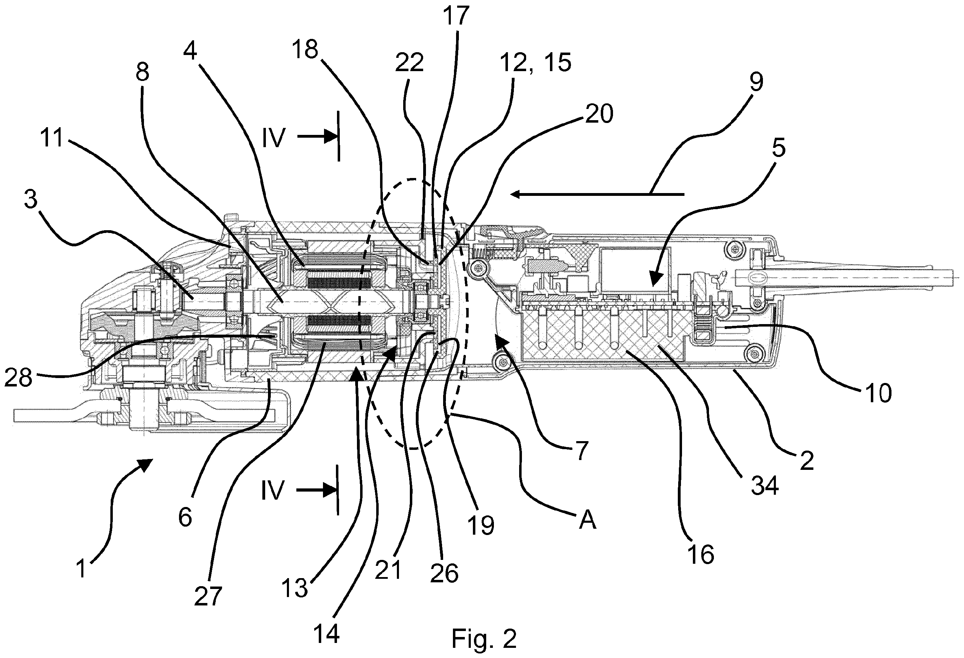

Dem in der Figur 2 dargestellten Längsschnitt durch die Handwerkzeugmaschine 1 kann insbesondere der Verlauf des Luftführungsbereiches 7 entnommen werden. Insbesondere wird daraus auch deutlich, dass in dem gezeigten Ausführungsbeispiel die Steuerelektronik 5 von dem Luftführungsbereich 7 räumlich abgetrennt ist, und dass zwischen dem Lufteinlass 10 und dem Separator 12 ein Elektronikkühlabschnitt 16 gebildet ist, in dem ein thermisch leitend mit der Steuerelektronik 5 verbundener Kühlkörper 34 angeordnet ist. Hierdurch wird die Steuerelektronik 5 auf einfache Art und Weise vor Schmutzpartikeln geschützt, die in der Kühlluft enthalten sind, und gleichzeitig gekühlt. Die Verläufe des äußeren Teilluftstroms 13 und des inneren Teilluftstroms 14 werden nachstehend näher erläutert.

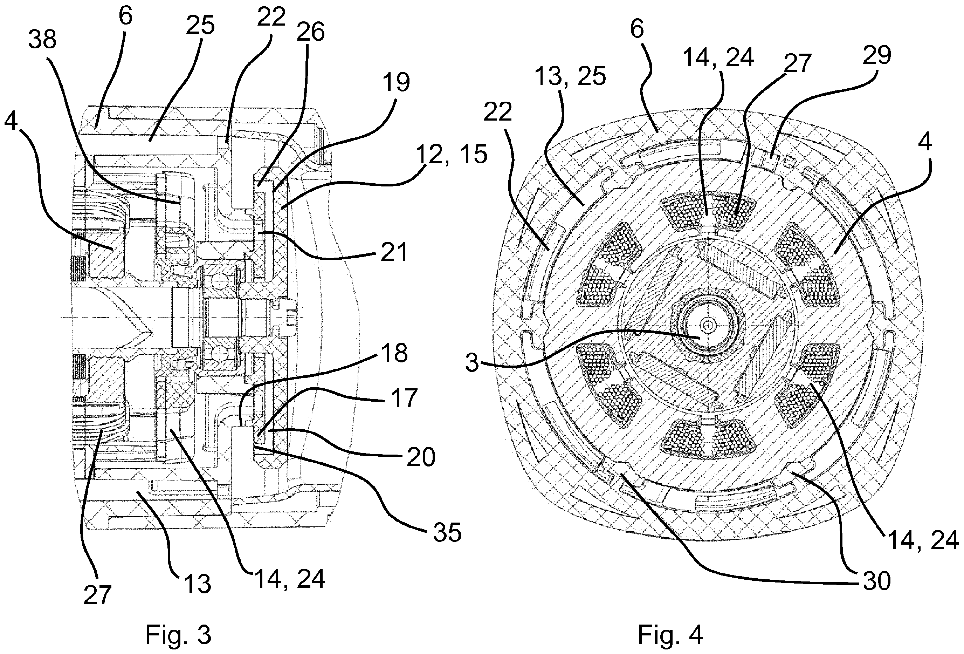

Wie dem in der Figur 3 dargestellten Detail A entnommen werden kann, ist an der dem Lufteinlass 10 zugewandten Stirnseite des Motorgehäuses 6 ein einen Ringbund 17 aufweisender Fortsatz 18 ausgebildet, in den eine an der Separatorscheibe 15 ausgebildete Vertiefung 19 eingreift. Hierdurch wird zwischen dem Motorgehäuse 6 und der Separatorscheibe 15 ein Luftspalt 20 gebildet, durch den der innere Teilluftstrom 14 in das Innere des Motors 4 geleitet wird. In dem gezeigten Ausführungsbeispiel liegt das Verhältnis zwischen der Breite des Luftspalts 20 und der Höhe des Luftspalts 20 bei 3:4. Das Verhältnis zwischen der Höhe des Fortsatzes 18 und der radialen Erstreckung des Ringbunds 17 liegt in dem gezeigten Ausführungsbeispiel bei 4:3. Hierdurch wird sichergestellt, dass Verunreinigungen nicht in den Luftspalt 20 selbst eindringen können, sondern vielmehr in Richtung des äußeren Teilluftstroms 13 nach außen abtransportiert werden. Zwischen dem Motorgehäuse 6 und dem Separator 12 ist ein Umkehrungsbereich 26 ausgebildet, in dem die Strömungsrichtung des inneren Teilluftstroms 14 der Hauptströmungsrichtung 9 entgegen gerichtet ist. Durch die Separatorscheibe 15, die drehfest mit der Rotorwelle 3 verbunden ist, werden die in der Kühlluft enthaltenen Schmutzpartikel radial nach außen geleitet und in dem äußeren Teilluftstrom 13 konzentriert. Der innere Teilluftstrom 14 wird dann durch den Luftspalt 20 dem Inneren des Motors 4 zugeführt. Durch den Umkehrungsbereich 26, in dem die Richtung des inneren Teilluftstroms 14 der Hauptströmungsrichtung 9 entgegengerichtet ist, wird ein Eindringen von Schmutzpartikeln in den Luftspalt 20 verhindert. Der Einlass 35 des Luftspalts 20 ist dabei durch die radiale Erstreckung des Ringbunds 17 von der axialen Erstreckung des Fortsatzes 18 radial beabstandet, so dass die Schmutzpartikel dem äußeren Teilluftstrom 13 zugeleitet werden und nicht in den Luftspalt 20 eindringen können.

Der durch die Separatorscheibe 15 in den äußeren Teilluftstrom 13 und in den inneren Teilluftstrom 14 aufgetrennte Kühlluftstrom wird nun durch innere Öffnungen 21 und äußere Öffnungen 22, die in dem Motorgehäuse 6 ausgebildet sind, in das Innere des Motorgehäuses 6 geleitet. Die inneren Öffnungen 21 und die äußeren Öffnungen 22 sind dabei jeweils als ringsegmentartige Schlitze 23 gebildet. Durch die inneren Öffnungen 21 wird der innere Teilluftstrom 14 und durch die äußeren Öffnungen 22 der äußere Teilluftstrom 13 dem Motor 4 zugeleitet. Hierzu sind die inneren Öffnungen 21 jeweils mit einem inneren Überströmungskanal 24 fluidleitend verbunden, während die äußeren Öffnungen 22 jeweils mit einem äußeren Überströmungskanal 25 fluidleitend verbunden sind. Der Motor 4 ist an seiner dem Lufteinlass 10 zugewandten Stirnseite durch eine Motorabdeckung 38 zusätzlich geschützt.

Wie der in der Figur 4 dargestellten Schnittansicht entlang des Schnittes IV-IV aus der Figur 2 entnommen werden kann, sind die inneren Überströmungskanäle 24 zwischen den Polwicklungen 27 des Motors 4 ausgebildet. Die äußeren Überströmungskanäle 25 sind hingegen zwischen dem Motorgehäuse 6 und dem Außenumfang des Motors 4 gebildet, wodurch sichergestellt wird, dass die Schmutzpartikel, die in der Kühlluft enthalten sind, nicht in das Innere des Motors 4 gelangen können, sondern außen an diesem vorbeigeleitet werden. Die einzelnen äußeren Überströmungskanäle 25 sind durch Führungsrippen 30 voneinander getrennt, durch die zudem eine Führung für den Motor 4 bei der Montage bereitgestellt wird. Zudem wird hierdurch eine drehfeste Verbindung des Stators des Motors 4 mit dem Motorgehäuse 6 sichergestellt.

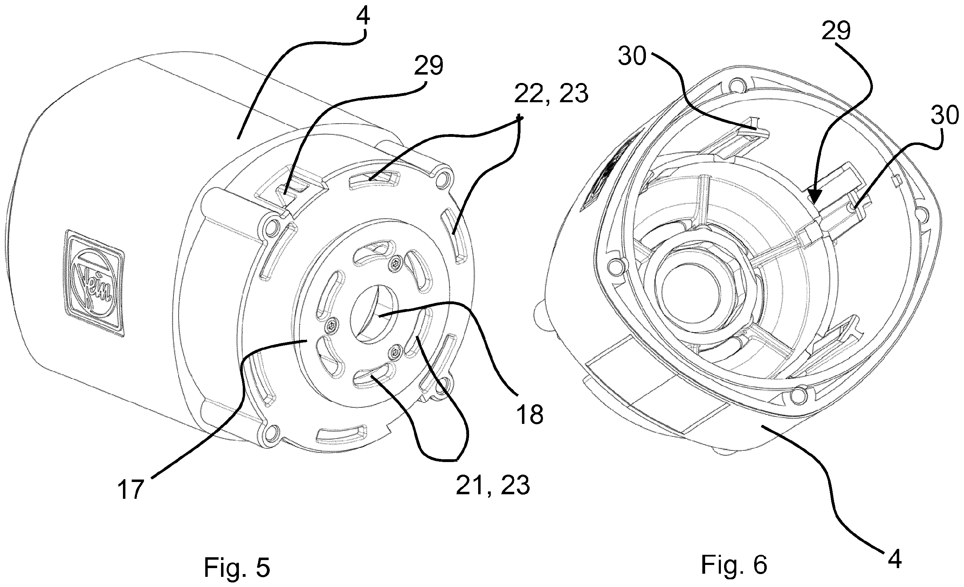

Figur 5 zeigt in einer perspektivischen Ansicht die den Lufteinlässen 10 zugewandte Stirnseite des Motorgehäuses 6. Auch wird aus dieser Ansicht insbesondere die Gestaltung des Fortsatzes 18 und des Ringbunds 17 deutlich. Weiterhin ist auch die Anordnung der inneren Öffnungen 21 und der äußeren Öffnungen 22 ersichtlich, die in dem gezeigten Ausführungsbeispiel als ringsegmentartige Schlitze 23 gebildet sind und gleichmäßig auf der Stirnseite des Motorgehäuses 6 verteilt sind. Ebenfalls lässt sich aus der Figur 5 die stirnseitige Mündung eines Kabelschachtes 29 entnehmen, der in dem Motorgehäuse 6 ausgebildet ist und von dem äußeren Teilluftstrom 13 räumlich abgetrennt ist. Durch diesen Kabelschacht 29 lassen sich die den Motor 4 kontaktierenden Anschlusskabel aus dem Motorgehäuse 6 heraus zu der Steuerelektronik 5 führen, ohne dass diese mit den in dem äußeren Teilluftstrom 13 der Kühlluft enthaltenen Schmutzpartikel in Kontakt kommen. Der Verlauf dieses Kabelschachts 29 im Inneren des Motorgehäuses 6 lässt sich dabei insbesondere auch aus der Figur 6 entnehmen, die ebenfalls das Motorgehäuse 6 in einer perspektivischen Ansicht aus der den Lufteinlässen 10 abgewandten Seite her zeigt. Aus dieser Ansicht sind insbesondere auch die innenumfangsseitig an dem Motorgehäuse 6 ausgebildeten Führungsrippen 30 erkennbar, auf die der Motor 4 aufgeschoben werden kann und zwischen denen die äußeren Überströmungskanäle 25 gebildet sind.

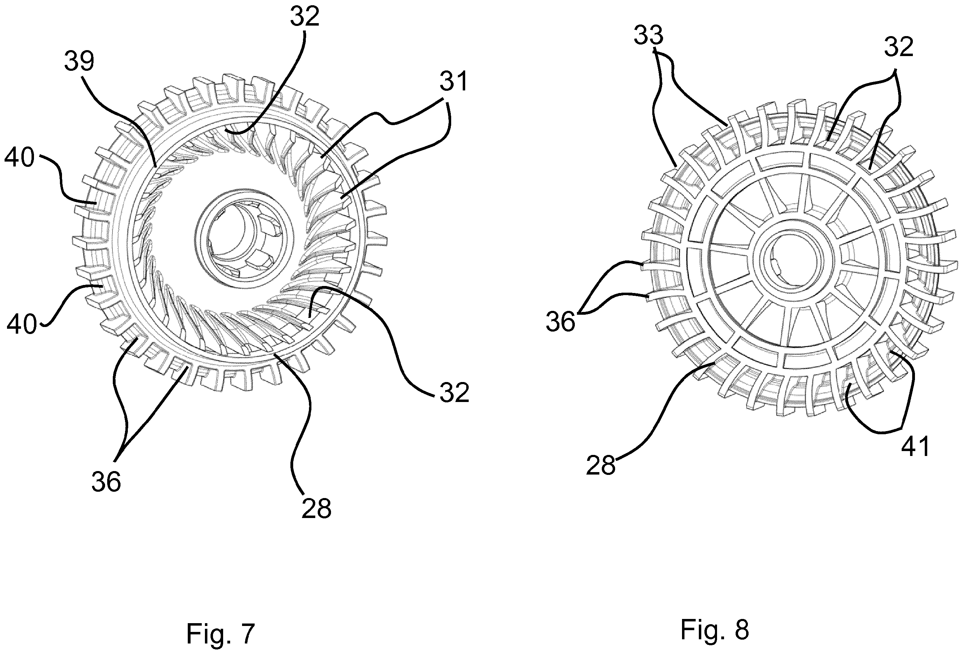

Figur 7 zeigt in einer perspektivischen Ansicht die dem Motor 4 zugewandte Stirnseite der zwischen dem Motor 4 und dem Luftauslass 11 angeordneten Lüfterscheibe 28 und Figur 8 die dem Motor 4 abgewandte Stirnseite. Die Lüfterscheibe 28 weist dabei Luftleitelemente 31 auf, die den inneren Teilluftstrom 14 radial nach außen leiten und auf der dem Motor 4 abgewandten Stirnseite der Lüfterscheibe 28 mit dem äußeren Teilluftstrom 13 rekombinieren. Hierzu weist die Lüfterscheibe 28 Durchbrüche 32 auf, durch die der vom Inneren des Motor 4 kommende innere Teilluftstrom 14 zu dem äußeren Teilluftstrom 13 geleitet wird. Die Luftleitelemente 31 weisen dabei eine Krümmung auf und werden nach außen hin höher. Wie insbesondere der Figur 8 entnommen werden kann, münden die Durchbrüche 32 in Rekombinationskonturen 41, durch die der innere Teilluftstrom 14 radial nach außen in Richtung des äußeren Teilluftstroms 13 geleitet und mit diesem vereinigt wird. Zudem wird hierdurch gewährleistet, dass dem inneren Teilluftstrom 14 eine axiale Bewegungskomponente in Hauptströmungsrichtung 9 aufgeprägt wird. Im radial äußeren Bereich der Lüfterscheibe 28 sind in dem gezeigten Ausführungsbeispiel durch Rippenbögen 36 begrenzte Durchtrittsöffnungen 33 ausgebildet, durch die der äußere Teilluftstrom 13 aus den Luftauslässen 11 herausgeleitet wird.

Zwischen den Rippenbögen 31 sind auf der dem Motor 4 zugewandten Stirnseite der Lüfterscheibe 28 Strömungskonturen 40 ausgebildet, die den äußeren Teilluftstrom radial nach außen in Richtung der Durchtrittsöffnungen 33 leiten und diesen durch die damit verbundene Querschnittsreduzierung axial beschleunigt. In dem gezeigten Ausführungsbeispiel sind die Luftleitelemente 31 durch einen Trennringbund 39 von den Durchtrittsöffnungen 33 räumlich abgetrennt, um eine Rekombination der beiden Teilluftströme auf der dem Motor zugewandten Stirnseite der Lüfterscheibe 28 zu verhindern. Durch die spezielle Gestaltung der einzelnen Kreissektoren der Lüfterscheibe 28 wird letztlich eine effiziente Rekombination des inneren Teilluftstroms 14 und des äußeren Teilluftstroms 13 erreicht und die axiale Förderung des rekombinierten Luftstroms begünstigt und dadurch die Gesamtfördermenge des Lüftersystems optimiert.

### Bezugszeichenliste

- 1: Handwerkzeugmaschine
- 2: Gehäuse
- 3: Rotorwelle
- 4: Motor
- 5: Steuerelektronik
- 6: Motorgehäuse
- 7: Luftführungsbereich
- 8: Motorlängsachse
- 9: Hauptströmungsrichtung
- 10: Lufteinlass
- 11: Luftauslass
- 12: Separator
- 13: äußerer Teilluftstrom
- 14: innerer Teilluftstrom
- 15: Separatorscheibe
- 16: Elektronikkühlabschnitt
- 17: Ringbund
- 18: Fortsatz
- 19: Vertiefung
- 20: Luftspalt
- 21: innere Öffnung
- 22: äußere Öffnung
- 23: ringsegmentartiger Schlitz
- 24: innere Überströmungskanal
- 25: äußere Überströmungskanal
- 26: Umkehrungsbereich
- 27: Polwicklung
- 28: Lüfterscheibe
- 29: Kabelschacht
- 30: Führungsrippen
- 31: Luftleitelement
- 32: Durchbruch
- 33: Durchtrittsöffnung
- 34: Kühlkörper
- 35: Einlass
- 36: Rippenbogen
- 37: Luftleitstruktur
- 38: Motorabdeckung
- 39: Trennringbund
- 40: Strömungskontur
- 41: Rekombinationskontur

## Patentansprüche

1. Handwerkzeugmaschine (1) zum Bearbeiten von Werkstücken, mit einem Gehäuse (2), in dem ein eine Rotorwelle (3) antreibender Motor (4) aufgenommen ist, sowie mit einem in dem Gehäuse (2) ausgebildeten Luftführungsbereich (7) zur Zuleitung von Kühlluft zu dem Motor (4) entlang einer im Wesentlichen parallel zu einer Motorlängsachse (8) orientierten Hauptströmungsrichtung (9), wobei der Luftführungsbereich (7) einenends durch mindestens einen Lufteinlass (10) und anderenends durch mindestens einen Luftauslass (11) zur Ausleitung der Kühlluft aus dem Gehäuse (2) begrenzt ist, wobei in dem Luftführungsbereich (7) ein Separator (12) angeordnet ist zur Aufteilung der Kühlluft in einen den Motor (4) außenumfangsseitig umströmenden äußeren Teilluftstrom (13) und in einen den Motor (4) durchströmenden inneren Teilluftstrom (14), und dass der als eine Separatorscheibe (15) gebildete und in Hauptströmungsrichtung (9) vor dem Motor (4) angeordnete Separator (12) derartig ausgebildet ist, dass der Verschmutzungsgrad des äußeren Teilluftstroms (13) größer ist als der Verschmutzungsgrad des inneren Teilluftstroms (14), **dadurch gekennzeichnet, dass** das Gehäuse (2) mehrteilig gebildet ist und ein den Motor (4) aufnehmendes Motorgehäuse (6) umfasst, das an seiner dem Motor (4) abgewandten Stirnseite mindestens eine innere Öffnung (21) und mindestens eine äußere Öffnung (22) aufweist, die voneinander radial beabstandet sind.

2. Handwerkzeugmaschine (1) nach Anspruch 1, **dadurch gekennzeichnet, dass** die Separatorscheibe (15) drehfest mit der Rotorwelle (3) verbunden ist.

3. Handwerkzeugmaschine (1) nach Anspruch 1 oder 2, **dadurch gekennzeichnet, dass** das Flächenverhältnis der Summe der Flächen der mindestens einen inneren Öffnung (21) zu der Summe der Flächen der mindestens einen äußeren Öffnung (22) zwischen 1:1,5 und 1:0,75 und besonders bevorzugt bei 1:0,9 liegt.

4. Handwerkzeugmaschine (1) nach einem der Ansprüche 1 bis 3, **dadurch gekennzeichnet, dass** die mindestens eine innere Öffnung (21) und/oder die mindestens eine äußere Öffnung (22) als ein ringsegmentartiger Schlitz (23) ausgebildet ist.

5. Handwerkzeugmaschine (1) nach einem der Ansprüche 1 bis 4, **dadurch gekennzeichnet, dass** die mindestens eine innere Öffnung (21) mit einem inneren Überströmungskanal (24) fluidleitend verbunden ist, und dass die mindestens eine äußere Öffnung (22) mit einem äußeren Überströmungskanal (25) fluidleitend verbunden ist.

6. Handwerkzeugmaschine (1) nach Anspruch 5, **dadurch gekennzeichnet, dass** die inneren Überströmungskanäle zwischen den Polwicklungen (27) des Motors (4) und dass die äußeren Überströmungskanäle außenumfangsseitig an dem Motor (4) ausgebildet sind.

7. Handwerkzeugmaschine (1) nach einem der Ansprüche 1 bis 6, **dadurch gekennzeichnet, dass** an der dem Lufteinlass (10) zugewandten Stirnseite des Motorgehäuses (6) ein einen Ringbund (17) aufweisender Fortsatz (18) ausgebildet ist, und dass der Separator (12) auf der dem Lufteinlass (10) abgewandten Stirnseite eine den Ringbund (17) aufnehmende Vertiefung (19) aufweist zur Bildung eines den inneren Teilluftstrom (14) leitenden Luftspalts (20) zwischen dem Gehäuse (2) und dem Separator (12).

8. Handwerkzeugmaschine (1) nach Anspruch 7, **dadurch gekennzeichnet, dass** das Verhältnis zwischen der Breite des Luftspalts (20) und der Höhe des Luftspalts (20) bei 3:4 liegt, und dass das Verhältnis zwischen der Höhe des Fortsatzes (18) und der radialen Erstreckung des Ringbunds (17) bei 4:3 liegt.

9. Handwerkzeugmaschine (1) nach einem der Ansprüche 1 bis 8, **dadurch gekennzeichnet, dass** zwischen dem Gehäuse (2) und dem Separator (12) ein Umkehrungsbereich (26) ausgebildet ist, in dem die Strömungsrichtung des inneren Teilluftstroms (14) der Hauptströmungsrichtung (9) entgegengerichtet ist.

10. Handwerkzeugmaschine (1) nach einem der Ansprüche 1 bis 9, **dadurch gekennzeichnet, dass** im Bereich des mindestens einen Lufteinlasses (10) eine eine Filterfunktion bereitstellende Filterstruktur angeordnet ist, deren Öffnungen eine Größe aufweisen, die bevorzugt zwischen 100 µm und 300 µm liegt.

11. Handwerkzeugmaschine (1) nach einem der Ansprüche 1 bis 10, **dadurch gekennzeichnet, dass** eine den Motor (4) ansteuernde Steuerelektronik (5) vorgesehen ist, die von dem Luftführungsbereich (7) abgetrennt ist, und dass zwischen dem Lufteinlass (10) und dem Separator (12) ein Elektronikkühlabschnitt (16) gebildet ist, in dem ein thermisch leitend mit der Steuerelektronik (5) verbundener Kühlkörper (34) angeordnet ist.

12. Handwerkzeugmaschine (1) nach einem der Ansprüche 1 bis 11, **dadurch gekennzeichnet, dass** in dem Motorgehäuse (6) ein von dem äußeren Teilluftstrom (13) abgetrennter Kabelschacht (29) ausgebildet ist zur Ausleitung von den Motor (4) kontaktierenden Anschlusskabeln aus dem Motorgehäuse (6).

13. Handwerkzeugmaschine (1) nach einem der Ansprüche 1 bis 12, **dadurch gekennzeichnet, dass** zwischen dem Luftauslass (11) und dem Motor (4) eine Lüfterscheibe (28) vorgesehen ist zur Rekombination des inneren Teilluftstroms (14) mit dem äußeren Teilluftstrom (13) auf der dem Motor (4) abgewandten Seite der Lüfterscheibe (28) und zur Zuleitung des rekombinierten Luftstroms zu dem mindestens einen Luftauslass (11).

14. Handwerkzeugmaschine (1) nach Anspruch 13, **dadurch gekennzeichnet, dass** die Lüfterscheibe (28) Rekombinationskonturen (41) aufweist, die geeignet sind, den inneren Teilluftstrom (14) radial nach außen in Richtung des äußeren Teilluftstroms (13) und axial in Richtung der Hauptströmungsrichtung (9) zu führen.

## Claims

1. Handheld machine tool (1) for processing work pieces, having a housing (2) in which is accommodated a motor (4) driving a rotor shaft (3), and having an air guidance region (7) formed in the housing (2) for supplying cool air to the motor (4) along a main flow direction (9) oriented substantially parallel to a motor longitudinal axis (8), wherein the air guidance region (7) is limited at one end by at least one air inlet (10) and at the other end by at least one air outlet (11) for discharging the cool air out of the housing (2), wherein in the air guidance region (7) is arranged a separator (12) for dividing the cool air into an outer partial airflow (13) flowing around the motor (4) on the outer circumference and into an inner partial airflow (14) flowing through the motor (4), and that the separator (12) formed as a separator disc (15) and arranged in main flow direction (9) before the motor (4) is configured such that the degree of contamination of the outer partial airflow (13) is greater than the degree of contamination of the inner partial airflow (14), **characterised in that** the housing (2) is formed in multiple parts and includes a motor housing (6), accommodating the motor (4), which on its end face facing away from the motor (4) has at least one inner opening (21) and at least one outer opening (22) which are radially distanced from one another.

2. Handheld machine tool (1) according to claim 1, **characterised in that** the separator disc (15) is connected non-rotationally with the rotor shaft (3).

3. Handheld machine tool (1) according to claim 1 or 2, **characterised in that** the surface ratio of the sum of the surfaces of the at least one inner opening (21) to the sum of the surfaces of the at least one outer opening (22) is between 1:1.5 and 1:0.75 and especially preferably is 1:0.9.

4. Handheld machine tool (1) according to any of claims 1 to 3, **characterised in that** the at least one inner opening (21) and/or the at least one outer opening (22) is in the form of an annular segment-like slot (23).

5. Handheld machine tool (1) according to any of claims 1 to 4, **characterised in that** the at least one inner opening (21) is connected with an inner overflow channel (24) in a fluid-conducting manner, and that the at least one outer opening (22) is connected with an outer overflow channel (25) in a fluid-conducting manner.

6. Handheld machine tool (1) according to claim 5, **characterised in that** the inner overflow channels are formed between the poll windings (27) of the motor (4) and that the outer overflow channels are formed on the outer circumference of the motor (4).

7. Handheld machine tool (1) according to any of claims 1 to 6, **characterised in that** on the end face, facing towards the air inlet (10), of the motor housing (6) is formed an appendage (18) having an annular band (17), and that the separator (12) has on the end face facing away from the air inlet (10) an indentation (19) accommodating the annular band (17) for the formation of an air gap (20) between the housing (2) and the separator (12) which guides the inner partial airflow (14).

8. Handheld machine tool (1) according to claim 7, **characterised in that** the ratio between the width of the air gap (20) and the height of the air gap (20) is 3:4 and that the ratio between the height of the appendage (18) and the radial extension of the annular band (17) is 4:3.

9. Handheld machine tool (1) according to any of claims 1 to 8, **characterised in that** between the housing (2) and the separator (12) is formed a reversal region (26) in which the flow direction of the inner partial airflow (14) is orientated against the main flow direction (9).

10. Handheld machine tool (1) according to any of claims 1 to 9, **characterised in that** in the region of the at least one air inlet (10) is arranged a filter structure providing a filter function, the openings of which are preferably between 100 µm and 300 µm in size.

11. Handheld machine tool (1) according to any of claims 1 to 10, **characterised in that** a control electronics (5) controlling the motor (4) is provided which is separated from the air guidance region (7), and that between the air inlet (10) and the separator (12) is formed an electronic cooling portion (16) in which a cooling body (34) is arranged which is connected in a thermally conducting manner with the control electronics (5).

12. Handheld machine tool (1) according to any of claims 1 to 11, **characterised in that** in the motor housing (6) is formed a cable shaft (29) separated from the outer partial airflow (13) for guiding out of the motor housing (6) connection cables which contact the motor (4).

13. Handheld machine tool (1) according to any of claims 1 to 12, **characterised in that** between the air outlet (11) and the motor (4) is provided a fan disc (28) for recombining the inner partial airflow (14) with the outer partial airflow (13) on the side of the fan disc (28) facing away from the motor (4) and for supplying the recombined airflow to the at least one air outlet (11).

14. Handheld machine tool (1) according to claim 13, **characterised in that** the fan disc (28) has recombining contours (41) which are suitable to guide the inner partial airflow (14) radially to the outside in the direction of the outer partial airflow (13) and axially in the direction of the main flow direction (9).

## Revendications

1. Machine-outil portative (1) pour l'usinage de pièces à usiner, avec un boîtier (2), dans lequel un moteur (4) entraînant un arbre de rotor (3) est reçu, ainsi qu'avec une zone de guidage d'air (7) réalisée dans le boîtier (2) pour l'amenée d'air de refroidissement au moteur (4) le long d'un sens d'écoulement principal (9) orienté de manière sensiblement parallèle à un axe longitudinal de moteur (8), dans laquelle la zone de guidage d'air (7) est limitée à une extrémité par au moins une entrée d'air (10) et à l'autre extrémité par au moins une sortie d'air (11) pour l'évacuation de l'air de refroidissement hors du boîtier (2), dans laquelle un séparateur (12) est agencé dans la zone de guidage d'air (7) pour la répartition de l'air de refroidissement en un flux d'air partiel extérieur (13) s'écoulant côté périphérie extérieure autour du moteur (4) et en un flux d'air partiel intérieur (14) traversant le moteur (4), et que le séparateur (12) formé en tant que disque de séparateur (15) et agencé dans le sens d'écoulement principal (9) devant le moteur (4) est réalisé de sorte que le niveau de pollution du flux d'air partiel extérieur (13) est supérieur au niveau de pollution du flux d'air partiel intérieur (14), **caractérisée en ce que** le boîtier (2) est formé de plusieurs parties et comprend un carter de moteur (6) recevant le moteur (4), qui présente au niveau de son côté frontal opposé au moteur (4) au moins une ouverture intérieure (21) et au moins une ouverture extérieure (22), qui sont espacées radialement l'une de l'autre.

2. Machine-outil portative (1) selon la revendication 1, **caractérisée en ce que** le disque de séparateur (15) est relié solidaire en rotation à l'arbre de rotor (3).

3. Machine-outil portative (1) selon la revendication 1 ou 2, **caractérisée en ce que** le rapport de surface de la somme des surfaces de l'au moins une ouverture intérieure (21) par rapport à la somme des surfaces de l'au moins une ouverture extérieure (22) est entre 1:1,5 et 1:0,75 et le plus préférentiellement de 1:0,9.

4. Machine-outil portative (1) selon l'une quelconque des revendications 1 à 3, **caractérisée en ce que** l'au moins une ouverture intérieure (21) et/ou l'au moins une ouverture extérieure (22) est réalisée en tant que fente (23) de type segment annulaire.

5. Machine-outil portative (1) selon l'une quelconque des revendications 1 à 4, **caractérisée en ce que** l'au moins une ouverture intérieure (21) est reliée de manière fluidique à un canal de débordement intérieur (24), et que l'au moins une ouverture extérieure (22) est reliée de manière fluidique à un canal de débordement extérieur (25).

6. Machine-outil portative (1) selon la revendication 5, **caractérisée en ce que** les canaux de débordement intérieurs sont réalisés entre les enroulements polaires (27) du moteur (4) et que les canaux de débordement extérieurs sont réalisés côté périphérie extérieure au niveau du moteur (4).

7. Machine-outil portative (1) selon l'une quelconque des revendications 1 à 6, **caractérisée en ce qu'**un prolongement (18) présentant un collet annulaire (17) est réalisé au niveau du côté frontal tourné vers l'entrée d'air (10) du carter de moteur (6), et que le séparateur (12) présente un évidement (19) recevant le collet annulaire (17) sur le côté frontal opposé à l'entrée d'air (10) pour la formation d'un entrefer (20) conduisant le flux d'air partiel intérieur (14) entre le carter (2) et le séparateur (12).

8. Machine-outil portative (1) selon la revendication 7, **caractérisée en ce que** le rapport entre la largeur de l'entrefer (20) et la hauteur de l'entrefer (20) est de 3:4, et que le rapport entre la hauteur du prolongement (18) et l'extension radiale du collet annulaire (17) est de 4:3.

9. Machine-outil portative (1) selon l'une quelconque des revendications 1 à 8, **caractérisée en ce qu'**une zone d'inversion (26) est réalisée entre le boîtier (2) et le séparateur (12), dans laquelle le sens d'écoulement du flux d'air partiel intérieur (14) est opposé au sens d'écoulement principal (9).

10. Machine-outil portative (1) selon l'une quelconque des revendications 1 à 9, **caractérisée en ce qu'**une structure de filtre mettant à disposition une fonction de filtrage, dont les ouvertures présentent une taille, qui se situe de préférence entre 100 µm et 300 µm, est agencée dans la zone de l'au moins une entrée d'air (10).

11. Machine-outil portative (1) selon l'une quelconque des revendications 1 à 10, **caractérisée en ce qu'**une électronique de commande (5) commandant le moteur (4), qui est séparée de la zone de guidage d'air (7) est prévue, et qu'une section de refroidissement d'électronique (16) est formée entre l'entrée d'air (10) et le séparateur (12), dans laquelle un radiateur (34) relié de manière thermoconductrice à l'électronique de commande (5) est agencé.

12. Machine-outil portative (1) selon l'une quelconque des revendications 1 à 11, **caractérisée en ce qu'**une conduite de câbles (29) séparée du flux d'air partiel extérieur (13) est réalisée dans le carter de moteur (6) pour l'évacuation de câbles de raccordement touchant le moteur (4) hors du carter de moteur (6).

13. Machine-outil portative (1) selon l'une quelconque des revendications 1 à 12, **caractérisée en ce qu'**un disque de ventilateur (28) est prévu entre la sortie d'air (11) et le moteur (4) pour la recombinaison du flux d'air partiel intérieur (14) avec le flux d'air partiel extérieur (13) sur le côté du disque de ventilateur (28) opposé au moteur (4) et pour l'amenée du flux d'air recombiné vers l'au moins une sortie d'air (11).

14. Machine-outil portative (1) selon la revendication 13, **caractérisée en ce que** le disque de ventilateur (28) présente des contours de recombinaison (41), qui sont adaptés pour conduire le flux d'air partiel intérieur (14) radialement vers l'extérieur en direction du flux d'air partiel extérieur (13) et axialement en direction du sens d'écoulement principal (9).
